# EUROPEAN PATENT APPLICATION

(11) **EP 4 787 160 A1**
(43) Date of publication of application: **05.08.2026**
(21) Application number: 24884114.0
(22) Date of filing: 12.08.2024
(51) Int. Cl.: G06F 9/451

(54) **ICON DISPLAY METHOD, AND ELECTRONIC DEVICE AND STORAGE MEDIUM**

(30) Priority: 30.10.2023 CN 202311437395
(71) Applicant: Honor Device Co., Ltd., Shenzhen, Guangdong 518040 (CN)
(72) Inventor: WANG, Yufei, Shenzhen, Guangdong 518040 (CN); HE, Zhuangjie, Shenzhen, Guangdong 518040 (CN); CHEN, Xinsong, Shenzhen, Guangdong 518040 (CN); DU, Hongyan, Shenzhen, Guangdong 518040 (CN)
(74) Representative: Henselmann, Alexander Gerhard
(86) International application number: PCT/CN2024/111544
(87) International publication number: WO 2025/092107

(57) **Abstract**

Embodiments of this application relate to the field of terminal technologies, and in particular, to an icon display method, an electronic device, and a storage medium. In the method, a resource management framework obtains an icon material image and a border material image. The icon material image includes a content element of a target icon, the border material icon includes a border element of the target icon, and the target icon is a to-be-displayed icon of a home screen APP. Then, the resource management framework sends the icon material image to the home screen APP. Then, the home screen APP adjusts sizes of the icon material image and the border material image to a target size. Then, the home screen APP obtains an icon display file based on a border material image of the target size and an icon material image of the target size. Then, the home screen APP displays a target image on a display screen based on the icon display file. When an icon is displayed by using the method, clarity of an icon displayed on an electronic device can be improved, and user experience can be improved.

## Description

This application claims priority to Chinese Patent Application No. 202311437395.7, filed with the China National Intellectual Property Administration on October 30, 2023 and entitled "ICON DISPLAY METHOD, ELECTRONIC DEVICE, AND STORAGE MEDIUM", which is incorporated herein by reference in its entirety.

### TECHNICAL FIELD

Embodiments of this application relate to the field of terminal technologies, and in particular, to an icon display method, an electronic device, and a storage medium.

### BACKGROUND

With development of terminal technologies, there are increasingly more applications (application, APP) on an electronic device, and a user usually installs many APPs on the electronic device to meet requirements in various scenarios.

For the APP installed on the electronic device, the electronic device usually displays, on a home screen, an application icon corresponding to the APP, and the user may tap the application icon to start the APP corresponding to the application icon.

Currently, clarity of an icon displayed on the electronic device is low. This affects user experience.

### SUMMARY

Embodiments of this application provide an icon display method, an electronic device, and a storage medium, to improve clarity of an icon displayed on an electronic device and improve user experience.

To achieve the foregoing objective, the following technical solutions are used in the embodiments of this application.

According to a first aspect, an icon display method is provided. The method may be applied to an electronic device on which a target application is installed, for example, a mobile phone or a tablet computer. The target application may include an application whose icon is to be displayed on the electronic device. The method includes: The electronic device obtains a first image and a second image that correspond to a target icon. The target icon is an icon of the target application, that is, the target icon is an icon to be displayed on the electronic device. The first image includes a content element of the target icon, and the second image includes a border element of the target icon. Then, the electronic device adjusts a size of the first image to obtain a first image of a first size. Then, the electronic device adjusts a size of the second image to obtain a second image of a second size. Then, the electronic device combines the first image of the first size and the second image of the second size to obtain an icon display file. Then, the electronic device displays the target icon based on the icon display file. The first size may be understood as a size when the first image is displayed, for example, a size of the content element included in the target icon displayed on the electronic device. The second size may be understood as a size when the second image is displayed, for example, a size of the border element included in the target icon displayed on the electronic device.

In the method, after obtaining the icon display file through combination, the electronic device does not perform size adjustment on the icon display file, that is, does not perform size adjustment on the icon display file that includes both a white border element and a content element. Therefore, a non-integer row display phenomenon that affects icon display clarity and that occurs in the icon display file can be alleviated. Based on this, clarity of an icon displayed on the electronic device can be improved, and user experience can be improved.

In a design of the first aspect, before the size of the first image is adjusted, the method further includes: The electronic device deletes a border element included in the first image. The adjusting a size of the first image to obtain a first image of a first size includes: The electronic device adjusts a size of a first image in which the border element is deleted, to obtain the first image of the first size.

In this design, considering that the first image may include the border element, the electronic device may delete the border element included in the first image before adjusting the size of the first image. In this way, the first image may not include the border element. In this way, a non-integer row display phenomenon that occurs in the first image can be alleviated, clarity of an icon displayed on the electronic device can be further improved, and user experience can be further improved

In another possible design of the first aspect, that the electronic device deletes a border element included in the first image includes: The electronic device deletes the border element included in the first image based on the second image. In this design, when the electronic device displays an icon, there is a unified icon display effect. Therefore, there is a correspondence between the border element included in the first image and the border element included in the second image, for example, the border element included in the first image and the border element included in the second image are the same. Therefore, the border element included in the first image can be quickly and accurately deleted by using the second image.

In still another possible design of the first aspect, the second image includes a main body part and a blank part, and the main body part includes the border element. That the electronic device deletes the border element included in the first image based on the second image includes: The electronic device covers the first image with the second image, and enables centers of the first image and the second image to overlap each other; and retains an area that overlaps the blank part in the first image, and deletes an area that overlaps the main body part in the first image.

In yet another possible design of the first aspect, that the electronic device deletes a border element included in the first image includes: if a quantity of specified pixels included in the first image is greater than a preset quantity threshold, deleting the border element included in the first image. The specified pixels comprise identical pixels having a maximum quantity among pixels comprised in the second image. It may be understood that if RGB values of two pixels are the same, the two pixels are a same pixel; or if transparency of two pixels is the same, the two pixels are a same pixel. In this design, a pixel included in the first image is analyzed, so that it can be accurately determined whether the first image includes the border element.

In another possible design of the first aspect, that the electronic device deletes a border element included in the first image includes: if the target application includes a third-party application, deleting the border element included in the first image. In this design, the first image corresponds to the target icon, and the target icon corresponds to the target application. The electronic device may quickly and accurately determine, based on a type of the application, whether the first image includes the border element.

In still another possible design of the first aspect, the deleting a border element included in the first image includes: If the target application includes a system application and a third-party theme is applied to the electronic device, the electronic device deletes the border element included in the first image. In this design, the first image corresponds to the target icon, and the target icon corresponds to the target application. The electronic device may quickly and accurately determine, based on a type of a theme applied to the electronic device and a type of the application, whether the first image includes the border element.

In another possible design of the first aspect, before the electronic device combines the first image of the first size and the second image of the second size, the method further includes: The electronic device performs a rounding operation on the first image of the first size and the second image of the second size. The combining the first image of the first size and the second image of the second size includes: The electronic device combines a first image of the first size obtained after the rounding operation and a second image of the second size obtained after the rounding operation.

In this design, considering that a non-integer row display phenomenon may occur when size adjustment is performed on the first image and the second image, the rounding operation may be performed on the first image of the first size and the second image of the second size after size adjustment. In this way, occurrence of the non-integer row display phenomenon can be further alleviated, and icon clarity can be further improved.

In still another possible design of the first aspect, that the electronic device obtains a first image and a second image that correspond to a target icon includes: The electronic device obtains an icon image and the second image that correspond to the target icon in response to a specified event. The specified event includes any one of a home screen application start completion event, an icon update event, and a theme change event.

In another possible design of the first aspect, the electronic device includes a home screen application and a resource management framework, and the obtaining a first image and a second image that correspond to a target icon includes: The resource management framework obtains the first image and the second image that correspond to the target icon; and then the resource management framework adjusts the sizes of the first image and the second image to a specified size, where the specified size is greater than or equal to a maximum size of each icon displayed on the electronic device. The method further includes: The resource management framework sends a first image of the specified size and a second image of the specified size to the home screen application; and the home screen application receives the first image of the specified size and the second image of the specified size.

It may be understood that the resource management framework or the home screen application may be developed by a different developer (development team). In this design, all icon materials received by the home screen APP are of a same size, thereby improving processing efficiency of the home screen APP. In addition, for a developer of the home screen APP, if all the icon materials received by the home screen APP are of the same size, development costs of the developer can be reduced.

According to a second aspect, this application provides an electronic device. The electronic device includes a memory, one or more processors, and a Bluetooth module. The memory is coupled to the processor. The memory stores computer program code, and the computer program code includes computer instructions. When the computer instructions are executed by the processor, the electronic device is enabled to perform the method provided in any one of the first aspect and the possible designs of the first aspect.

According to a third aspect, this application provides a computer-readable storage medium. The computer-readable storage medium stores computer instructions, and when the computer instructions are run on an electronic device, the electronic device is enabled to perform the method provided in any one of the first aspect and the possible designs of the first aspect.

According to a fourth aspect, this application provides a computer program product including instructions. When the computer program product runs on an electronic device, the electronic device is enabled to perform the method provided in any one of the first aspect and the possible designs of the first aspect.

For technical effects brought by any design manner of the second aspect to the fourth aspect, refer to the technical effects brought by different design manners of the first aspect. Details are not described herein again.

### BRIEF DESCRIPTION OF DRAWINGS

FIG. 1 is a schematic diagram of a use scenario according to an embodiment of this application;
FIG. 2 is a schematic diagram of a home screen of an electronic device according to an embodiment of this application;
FIG. 3 is a schematic diagram of an icon according to an embodiment of this application;
FIG. 4 is a schematic flowchart of an icon display process according to an embodiment of this application;
FIG. 5 is a schematic flowchart of another icon display process according to an embodiment of this application;
FIG. 6 is a schematic diagram of a hardware structure of an electronic device according to an embodiment of this application;
FIG. 7 is a schematic diagram of a software architecture of an electronic device according to an embodiment of this application;
FIG. 8 is a schematic flowchart of an icon display method according to an embodiment of this application;
FIG. 9 is a schematic flowchart of removing a border element according to an embodiment of this application;
FIG. 10 is a schematic flowchart of removing a border element from a multi-layer icon according to an embodiment of this application;
FIG. 11 is a schematic flowchart of generating an icon display file according to an embodiment of this application;
FIG. 12 is a schematic flowchart of another icon display method according to an embodiment of this application; and
FIG. 13 is a schematic diagram of a hardware structure of another electronic device according to an embodiment of this application.

### DESCRIPTION OF EMBODIMENTS

Technical solutions in the embodiments of this application are described below with reference to the accompanying drawings in the embodiments of this application. In the descriptions of this application, unless otherwise specified, the character "/" indicates an "or" relationship between associated objects. For example, A/B may represent A or B. The term "and/or" in this application is merely an association relationship for describing associated objects and represents that three relationships may exist. For example, A and/or B may represent the following three cases: Only A exists, both A and B exist, and only B exists, where A and B may be in a singular or plural form. In addition, in the descriptions of the embodiments of this application, unless otherwise specified, "a plurality of" means two or more. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural. In addition, for ease of clearly describing the technical solutions in the embodiments of this application, in the embodiments of this application, words such as "first" and "second" are used to distinguish between same items or similar items whose functions and roles are basically the same. A person skilled in the art may understand that the words such as "first" and "second" do not limit a quantity or an execution sequence, and the words such as "first" and "second" do not define a definite difference.

In addition, in the embodiments of this application, the word such as "example" or "for example" is used to represent giving an example, an illustration, or a description. Any embodiment or design solution described as "example" or "for example" in the embodiments of this application should not be explained as being preferred or advantageous over other embodiments or design solutions. Exactly, use of the word such as "example" or "for example" is intended to present a related concept in a specific manner, to facilitate understanding.

A user may install many APPs on an electronic device to meet requirements in various scenarios. For the APP installed on the electronic device, the electronic device may display, on a home screen, an APP icon corresponding to the APP, and the user may tap the APP icon to start the APP corresponding to the APP icon. Alternatively, a drag operation is performed on the home screen icon to manage the APP icon.

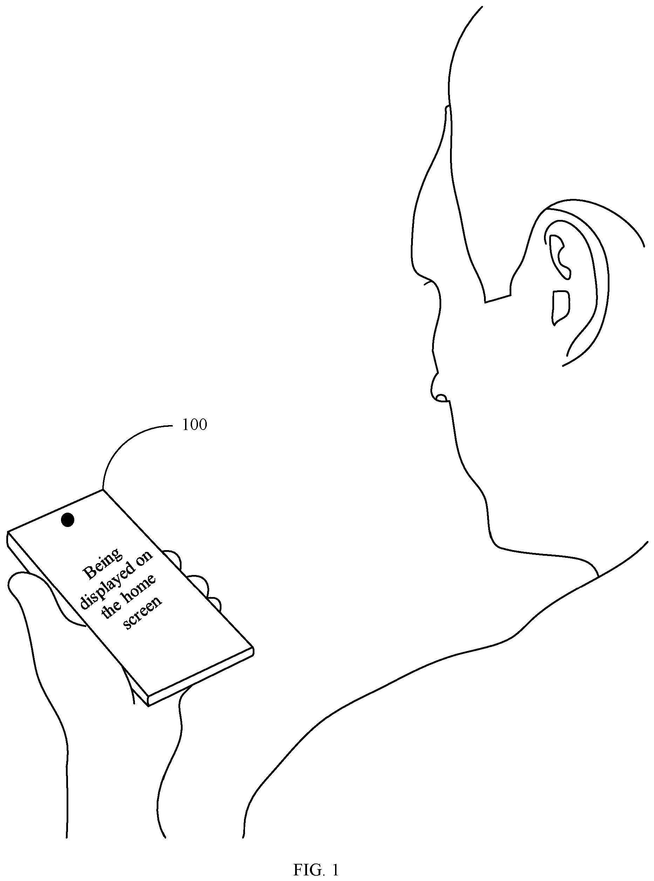

For example, with reference to FIG. 1, the technical solutions provided in the embodiments of this application may be applied to daily use of an electronic device by a user. In a process in which the user daily uses the electronic device, the electronic device may display a home screen, and the user may tap an icon (icon) of an application on the home screen of the electronic device 100 to start the application. The icon may also be referred to as an application icon, an APP icon, an APP logo, or the like. The electronic device may display icons of different sizes.

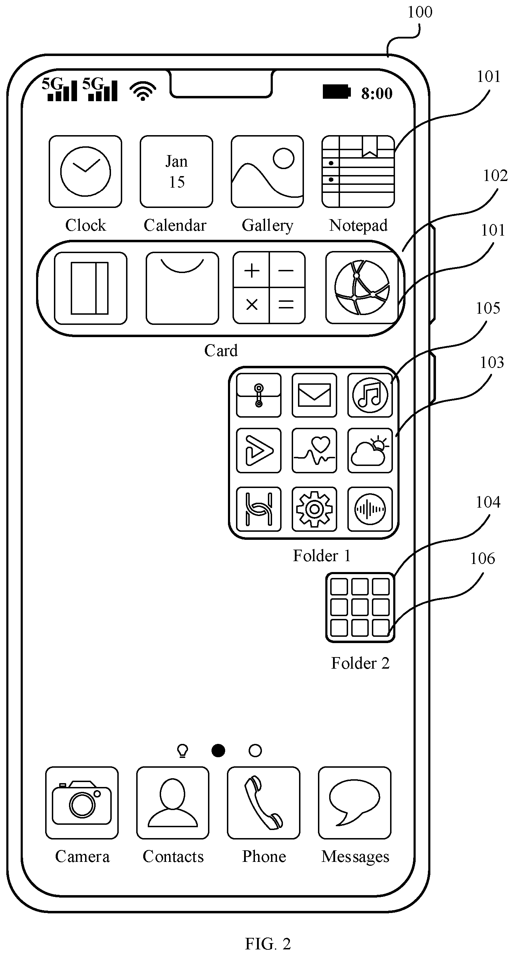

For example, with reference to FIG. 2, an A-sized icon 101, a card 102, a large folder 103, and a small folder 104 are displayed on the home screen of the electronic device 100. The card includes a plurality of A-sized icons 101, the large folder 103 includes a plurality of B-sized icons 105, and the small folder 104 includes a plurality of C-sized icons 106. It should be noted that the A-sized icon 101, the B-sized icon 105, and the C-sized icon 106 are merely displayed on a display screen in different sizes, procedures of displaying the A-sized icon 101, the B-sized icon 105, and the C-sized icon 106 on the home screen are the same or similar, and the A-sized icon 101, the B-sized icon 105, and the C-sized icon 106 may be collectively referred to as icons. It should be noted that the icon in the embodiments of this application includes but is not limited to the A-sized icon 101, the B-sized icon 105, and the C-sized icon 106 shown in FIG. 2. In actual application, the icon may be of more other sizes. Specifically, this may be designed based on an actual use requirement. A size of the icon is not limited in embodiments of this application.

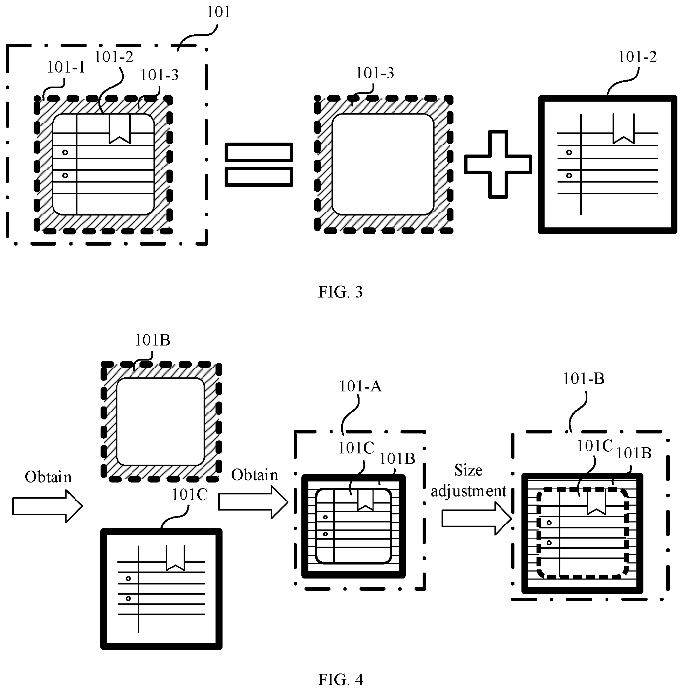

For example, an A-sized icon 101 corresponding to a Notepad APP in FIG. 2 is used as an example. With reference to FIG. 3, composition of the icon is described. A display boundary 101-1 of the A-sized icon 101 specifies a maximum size that can be occupied by the A-sized icon 101 on the display screen of the electronic device 100, for example, 40 pixels (pixel, PX)*40 pixels. Within the display boundary 101, the A-sized icon 101 includes a border 101-3 and icon content 101-2, and the border 101-3 and the icon content 101-2 jointly present a display effect of the A-sized icon 101 on the display screen. The icon content 101-2 is used to display a line, a color, a shape, and the like in the icon. A part filled with a slash in the border 101-3 is a main body part of the border 101-3, and the remaining part is a blank part. After the border 101-3 and the icon content 101-2 are superposed, the blank part does not shield the icon content 101-2, and the icon content is displayed; and the main body part shields the icon content 101-2, the main body part is displayed, for example, is fully transparently displayed, a specific color is displayed, and so on. The icon is displayed by using a combination of the border and the icon content, so that content of the icon displayed on the home screen can be unified. In addition, it may be convenient for the user to perform an interaction operation on the icon on the home screen, for example, an operation of tapping the icon or an operation of dragging the icon. The border may also be referred to as a mask (mask), a border element, or the like. The icon content may also be referred to as an icon content element, a content element, or the like. The electronic device may use a border material to carry the border element, and the electronic device may use an icon material to carry the icon content element. The border material may also be referred to as a border material file or a border material image, and the icon material may also be referred to as an icon material image. In some embodiments, the icon material may be referred to as a first image, the border material may be referred to as a second image, the first image includes the content element (icon content element) of the icon, and the second image includes the border element.

Icons may be classified into a single-layer icon and a multi-layer icon based on a layer forming the icon. The single-layer icon is an icon that includes only one layer, and the layer includes all icon content. The multi-layer icon includes a plurality of layers, for example, includes a foreground and a background, and a combination of the foreground and the background includes all icon content.

Icons may be classified into a third-party APP icon and a system icon based on an application corresponding to the icon or a source of an application corresponding to the icon. The third-party APP icon corresponds to a third-party APP, and the system icon corresponds to a system application. The third-party APP icon is an icon developed by a developer of the third-party APP, for example, an icon of an AA video application or an icon of a BB music application. The system icon is an icon of an application preset in an operating system of the electronic device, for example, an icon of a phone application and an icon of a messages application.

In some solutions, the electronic device may obtain the icon material and the border material. Then, the electronic device obtains an icon display file based on the icon material and the border material. Then, the electronic device performs size adjustment on the icon display file, and displays the icon based on an icon display file obtained after size adjustment.

For example, the A-sized icon corresponding to the Notepad APP is used as an example. With reference to FIG. 4, the electronic device obtains an icon material 101B and a border material 101C. Then, the electronic device obtains an icon display file 101-A based on the icon material 101B and the border material 101C. Then, the electronic device performs size adjustment on the icon display file 101-A, and displays the icon based on an icon display file 101-B obtained after size adjustment.

The electronic device adjusts the size of the icon display file to display icons of different sizes on the home screen, for example, the A-sized icon 101, the B-sized icon 103, or the C-sized icon 106 in FIG. 2. Because the icon display file includes both a border element and icon content, and the home screen APP adjusts the size of the icon display file, a non-integer row (column) display phenomenon occurs. Particularly at a connection point between the border material and the icon material, the non-integer row (column) display phenomenon frequently occurs. Consequently, clarity of an icon displayed on the electronic device is low. This affects user experience. The non-integer row (column) display phenomenon may also be referred to as a decimal row (column) display phenomenon, a fractional row (column) display phenomenon, or the like. For ease of the following description, the non-integer row (column) display phenomenon may be briefly referred to as a non-integer row display phenomenon.

It may be understood that the electronic device may display a image on the display screen based on color code. For example, the electronic device may display a image on the display screen based on red, green, and blue (RGB) code. Specifically, the display screen of the electronic device includes a plurality of pixels (pixel, PX). The electronic device displays a image on the display screen by controlling an RGB code value of each pixel. For example, for a image displayed on a display screen, a corresponding display file includes RGB code values of a plurality of PXs. For example, the display file includes 50PX*50XP_RGB (100.100.100), 51PX*50XP_RGB (200.200.200), and 53PX*53XP_RGB (0.0.0). Herein, 50PX*50XP represents a pixel in a 50th row and a 50th column on the display screen. Usually, the display file includes only an RGB value displayed at a location corresponding to an integer row and an integer column. This may be referred to as integer row display.

However, in some cases, the display file further includes an RGB value displayed in a non-integer row/non-integer column, for example, 50.3PX*50.3XP_RGB (100.100.100), 51.3PX*51.3XP_RGB (200.200.200), or 3.8PX*53.5XP_RGB (0.0.0). When display is performed on the display screen based on such a file, a non-integer row display phenomenon occurs. Specifically, when display is performed on the display screen based on such a display file, the RGB code value of the non-integer row/non-integer column is combined into the RGB code value of the integer row/integer column, and a pixel corresponding to the integer row/integer column is controlled to display a combined RGB code value. If 51.3PX*51.3XP_RGB (200.200.200) and 51PX*51XP_RGB (200.200.200) are recorded in the display file, the RGB code value of a pixel of 51.3PX*51.3XP is combined into the RGB code value of a pixel of 51PX*51XP on the display screen. For example, an RGB code value that is of the pixel of 51PX*51XP and that is obtained through combination may be (166.166.166). In addition, a image corresponding to the display file is displayed on the display screen based on 51PX*51XP_RGB (166.166.166). It may be learned that (200.200.200) that should be originally displayed at 51PX*51XP on the display screen is displayed as (166.166.166). This results in a change in a color of an image displayed on the display screen, and consequently clarity of a image displayed on the display screen is affected.

For example, still with reference to FIG. 4, a horizontal line filling in the figure represents green, and a dashed line in the icon display file 101-B obtained after size adjustment is a connection point between the border 101B and the icon content 101C. It is assumed that when the electronic device displays the icon display file 101-B obtained after size adjustment, the icon content 101C includes white and black lines, the border 101B is fully transparent, and a color, for example, green, of a home screen wallpaper is displayed. Because a non-integer row display phenomenon occurs at the connection point between the border 101B and the icon content 101C, when the electronic device displays the A-sized icon corresponding to the Notepad APP, at the connection point between the border and the icon content, neither the white and black lines are displayed based on the icon content 101C, nor the green color of the home screen wallpaper is displayed based on the border 101B, but a random color, for example, dark green or forest green, between black and green is displayed.

It may be learned from the foregoing analysis that because the non-integer row display phenomenon occurs, an RGB value of a pixel on the display screen is different from an RGB value recorded in the display file. Consequently, clarity of an icon displayed on the electronic device is low. This affects user experience.

In view of this, embodiments of this application provide an icon display method. In the method, after obtaining an icon material, an electronic device first performs size adjustment on the icon material, and then obtains an icon display file based on a border material and an icon material obtained after size adjustment. Then, the electronic device directly displays an icon based on the icon display file.

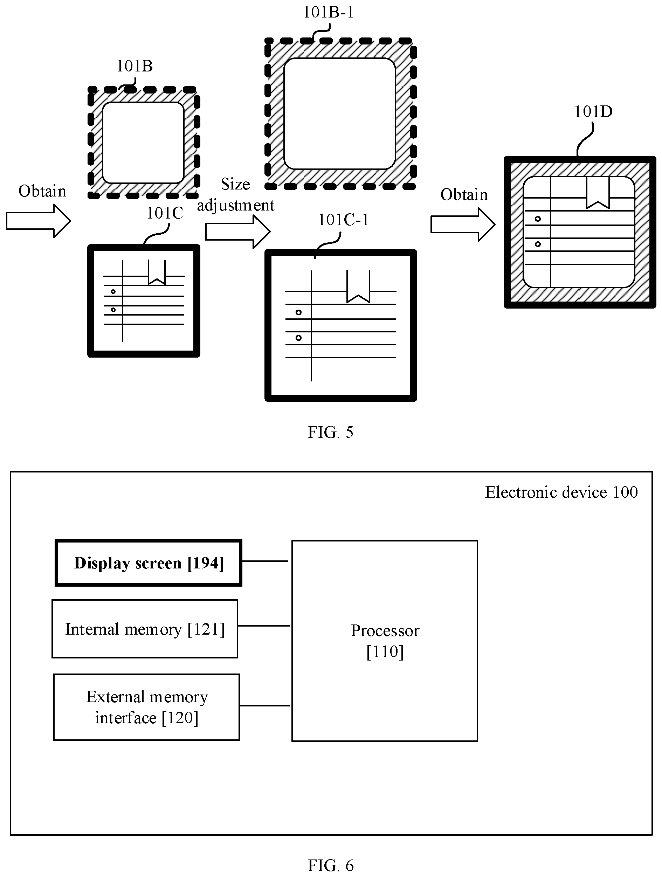

For example, the A-sized icon corresponding to the Notepad APP is used as an example. With reference to FIG. 5, the electronic device obtains an icon material 101B and a border material 101C. Then, the electronic device performs size adjustment on the icon material 101B and the border material 101C to obtain an icon material 101B-1 (also referred to as a first image of a first size) obtained after size adjustment and a border material 101C-1 (also referred to as a second image of a second size) obtained after size adjustment. Then, the electronic device obtains an icon display file 101D based on the icon material 101B-1 obtained after size adjustment and the border material 101C-1 obtained after size adjustment, and displays the icon based on the icon display file. It may be understood that the size adjustment shown in FIG. 5 is enlargement. In some cases, the size adjustment may alternatively be reduction. Whether the size adjustment is enlargement or reduction depends on an actual use requirement. The size adjustment is not limited in embodiments of this application.

The first size may be understood as a size when the first image is displayed, for example, a size of a content element included in a target icon displayed on the electronic device. For example, the size is a size of the icon content 101C in FIG. 3; or for another example, the size is a size of the icon content 101C in FIG. 4. The second size may be understood as a size when the second image is displayed, for example, a size of a border element included in the target icon displayed on the electronic device. For example, the size is a size of 101B in FIG. 3.

In this solution, after obtaining the icon display file, the electronic device does not perform size adjustment on the icon display file, that is, does not perform size adjustment on the icon display file that includes both icon content and a border element. Therefore, a non-integer row display phenomenon in the icon display file can be alleviated, or even no non-integer row display phenomenon occurs in the icon display file. This is different from some solutions in which after an icon display file is obtained, size adjustment needs to be performed on the icon display file, and a non-integer row display phenomenon occurs in the icon display file. When an icon is displayed by using the method, clarity of an icon displayed on the electronic device can be improved, and user experience can be improved.

The electronic device may be an electronic device with a display screen, for example, a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); may be a vehicle-mounted device with a display screen, for example, a vehicle-mounted computer or an in-vehicle computer; or may be an internet of things device with a display screen, for example, a smartwatch or a smart band. A product form of the electronic device is not limited in embodiments of this application.

Then, a hardware structure and a software structure of the electronic device 1000 are briefly described.

For example, with reference to FIG. 6, the electronic device 100 may include a processor 110, an external memory interface 120, an internal memory 121, a display screen 194, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or there may be different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The MIPI interface may be configured to connect the processor 110 to peripheral devices such as the display screen 194. The MIPI interface includes a camera serial interface (camera serial interface, CSI), a display serial interface (display serial interface, DSI), and the like. In some embodiments, the processor 110 communicates with the display screen 194 through the DSI interface, to implement a display function of the electronic device 100.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Mini-led, a Micro-Led, a Micro OLED, a quantum dot light emitting diode (quantum dot light emitting diodes, QLED), or the like. In some embodiments, the electronic device 100 may include one or N display screens 194, where N is a positive integer greater than 1.

For example, the electronic device 100 may display an icon of an APP through the display screen 194.

The external memory interface 120 may be configured to be connected to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

For example, the external memory card connected to the external memory interface 120 may be configured to store data related to icon display by the electronic device, for example, the foregoing icon material and border material, and a theme package.

The internal memory 121 may be configured to store computer-executable program code, and the executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

For another example, the internal memory 121 may be configured to store data related to icon display by the electronic device, for example, the foregoing icon material and border material, and a theme package.

A software system of the electronic device 100 may use a layered architecture, an event-driven architecture, a microkernel architecture, a microservice architecture, or a cloud architecture. In embodiments of this application, an Android^{™} system with a layered architecture is used as an example to describe the software structure of the electronic device 100.

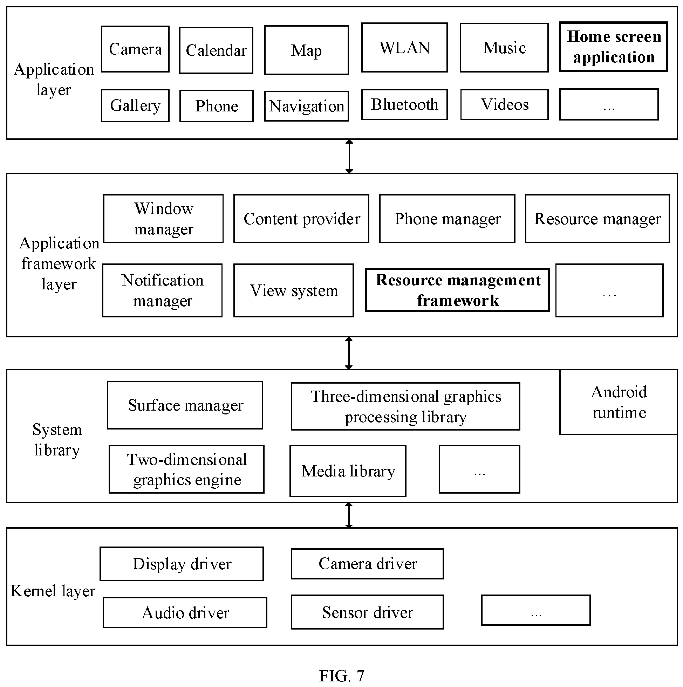

FIG. 7 is a block diagram of a software structure of an electronic device 100 according to an embodiment of this application.

In the layered architecture, software is divided into several layers, and each layer has a clear role and task. The layers communicate with each other through software interfaces. In some embodiments, the Android^{™} system is divided into four layers from top to bottom: an application layer, an application framework layer, an Android^{™} runtime (Android^{™} runtime) and system library, and a kernel layer.

The application layer may include a series of application packages.

As shown in FIG. 7, the application packages may include applications such as Camera, Gallery, Calendar, Phone, Map, Navigation, WLAN, Bluetooth, Music, and Videos.

The application layer may further include a home screen application (APP), and the home screen APP is used to display an APP icon on a home screen, layout of the APP icon, and the like.

The application framework layer provides an application programming interface (application programming interface, API) and a programming framework for an application at the application layer. The application framework layer includes some predefined functions.

As shown in FIG. 7, the application framework layer may include a window manager, a content provider, a view system, a phone manager, a resource manager, a notification manager, and the like.

The window manager is configured to manage a window program. The window manager may obtain a size of a display screen, determine whether there is a status bar, lock the screen, take a screenshot, and the like.

The content provider is configured to store and obtain data, and enable the data to be accessible by an application. The data may include a video, an image, audio, calls that are made and answered, a browsing history and a bookmark, a phone book, and the like.

The view system includes visual controls, for example, a control for displaying text and a control for displaying a image. The view system may be configured to construct an application. A display interface may include one or more views. For example, a display interface including an SMS message notification icon may include a view for displaying text and a view for displaying a image.

The phone manager is configured to provide the electronic device 100 with a communication function, for example, call status management (including answering, hanging up, and the like).

The resource manager provides various resources for an application, for example, a localized string, an icon, a image, a layout file, and a video file.

The notification manager enables an application to display notification information in the status bar, and may be configured to convey a notification-type message that may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert tone is made, the electronic device vibrates, or an indicator light blinks.

The application framework layer may further include a resource management framework, and the resource management framework is configured to obtain data related to icon display, for example, the icon material and the border material, from a memory of the electronic device 100. In some other implementations, the resource management framework may also be referred to as a home screen resource management framework, a smart home screen middle platform, or the like.

The android^{™} Runtime includes a kernel library and a virtual machine. The Android^{™} runtime is responsible for scheduling and management of the Android^{™} system.

The kernel library includes two parts: One part is a functional function that needs to be called in a java language, and the other part is a kernel library of Android^{™}.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playing and recording in a plurality of common audio and video formats, a still image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In a possible implementation, the resource management framework may obtain an icon material and a border material, and send the icon material and the border material to the home screen APP. Then, the home screen APP adjusts sizes of the icon material and the border material. Then, the home screen APP obtains an icon display file based on an icon material and a border material obtained after size adjustment. Then, the home screen APP displays an icon on the foregoing display screen 194 based on the icon display file.

The icon display method provided in the embodiments of this application is described below by using an example in which the electronic device is a mobile phone and the mobile phone displays an icon on a home screen in the use scenario shown in FIG. 1.

Considering that some icon materials may include a border element, and some icon materials do not include a border element, to further improve clarity of an icon displayed on the mobile phone, in some embodiments, the mobile phone may determine whether an icon material includes a border element, and if there is a border element, remove the border element, and then perform size adjustment to generate an icon display file.

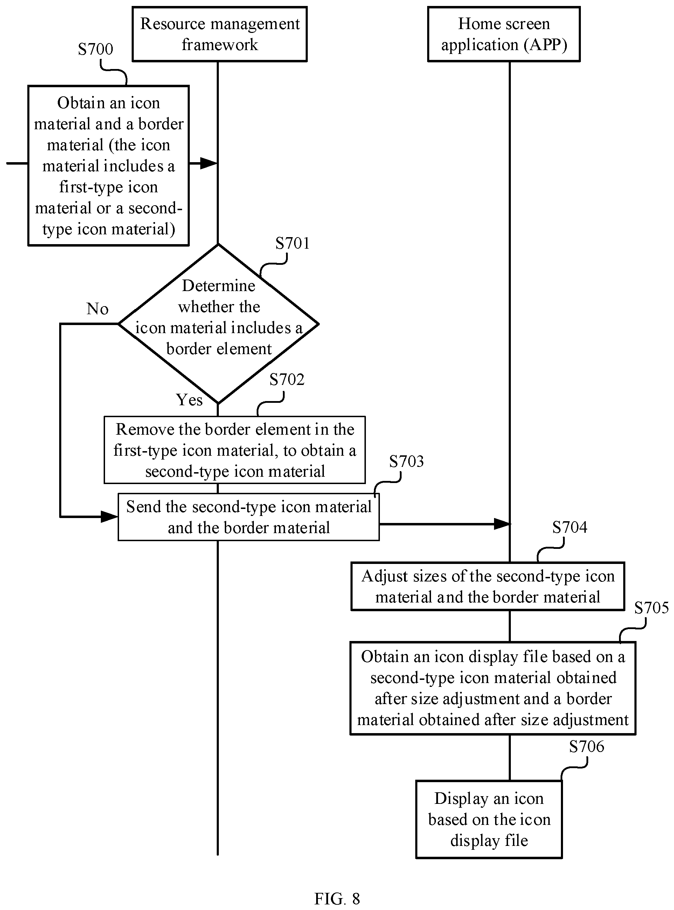

For example, with reference to FIG. 8, the icon display method provided in the embodiments of this application may include steps S700-S706.

S700: A resource management framework obtains an icon material and a border material.

The icon material may be an icon material of a to-be-displayed icon, or may be icon materials of all APPs on the mobile phone. The border material may be a border material corresponding to a theme being used on the mobile phone. The icon material includes icon content of the to-be-displayed icon, and the border material includes a border element of the to-be-displayed icon. The to-be-displayed icon on the mobile phone may be referred to as a target icon below. In some embodiments, there is a correspondence between the target icon and a target application. The target application may be an application whose icon is to be displayed on the electronic device. The icon material may be referred to as a first image, and the border material may be referred to as a second image.

For example, the resource management framework may obtain an icon material of a system application from a target theme package, or obtain an icon material of a third-party application from a program package of the third-party APP. The system application may be understood as a preconfigured application in an operating system of the mobile phone, for example, a phone application or a messages application. A target theme is a theme applied to the mobile phone, and the target theme package is a theme package corresponding to the theme used on the mobile phone. In addition, the resource management framework may obtain the border material from the target theme package.

In a possible implementation, step S700 may include: The resource management framework obtains the icon material and the border material in response to a specified event of a home screen APP. The specified event includes an application start completion event, a home screen icon update event, or a theme change event.

It may be understood that after starting, the home screen APP generates the start completion event, and sends the event to the resource management framework, or the home screen APP may broadcast the event. Alternatively, if a user downloads and installs an APP on the mobile phone, the home screen APP generates the home screen icon update event, and then the home screen APP sends the event to the resource management framework. Alternatively, if a user changes a theme applied to the mobile phone, the home screen APP may generate the theme change event, and then the home screen APP sends the event to the resource management framework.

The specified event may alternatively include a layout update event. If icon layout on a home screen of the mobile phone is updated, for example, there is an update from display of four icons in one row to display of five icons in one row, the home screen APP generates the layout update event, and sends the event to the resource management framework. It may be understood that the icon layout on the home screen of the mobile phone, for example, a quantity of icons displayed in one row on the home screen, or for another example, a quantity of rows for icon display on the home screen, may be set based on an actual requirement. This is not limited in embodiments of this application.

S701: The resource management framework determines whether the icon material includes a border element. If there is a border element, steps S702-S703 are performed. If there is no border element, step S703 is performed.

For ease of the following description, an icon material with a border element may be referred to as a first-type icon material, and an icon material without a border element may be referred to as a second-type icon material. It may be understood that a developer of the third-party application or the theme package sometimes may preset a border element in the icon material, that is, presets a first-type icon material. In this case, the first-type icon material obtained by the resource management framework includes a border element. Therefore, the border element in the first-type icon material may be removed to convert the first-type icon material into a second-type icon material, and subsequent steps are performed.

Therefore, through deletion of the border element in the first-type icon material, a non-integer row display phenomenon that occurs in the first-type icon material can be alleviated. In this way, clarity of an icon displayed on the electronic device can be further improved, and user experience can be further improved.

In a possible implementation, the resource management framework may determine, by using a quantity of specified pixels in the icon material, whether the icon material includes a border element. For example, if the quantity of specified pixels is greater than a preset quantity threshold, it is determined that the icon material is a first-type icon material. The quantity threshold may be 50, 100, 230, or the like.

There is a correspondence between the specified pixel and pixels forming the border material. For example, the specified pixel may be the most abundant pixel forming the border material, for example, a transparent pixel.

It may be understood that during icon display, to ensure coordination of icon display on the mobile phone, borders of different icons should be unified, for example, colors are unified. Therefore, there is a correspondence between the border element in the first-type icon material and the border material. For example, a pixel forming the border element is the same as a pixel forming the border material. Therefore, the specified pixel can be obtained by analyzing the pixel forming the border material. For example, a pixel having a maximum quantity among a plurality of pixels forming the border material may be used as the specified pixel. It is assumed that the pixels forming the border material include 200 transparent pixels and 50 black pixels. Based on this, it may be obtained that the specified pixel is a transparent pixel.

In another possible implementation, the specified pixel may be preset. For example, the specified pixel may be preconfigured in a configuration item of the mobile phone.

S702: The resource management framework removes the border element included in the first-type icon material, to obtain a second-type icon material.

In a possible implementation, the resource management framework may remove the border element in the first-type icon material by using the border material, to obtain the second-type icon material.

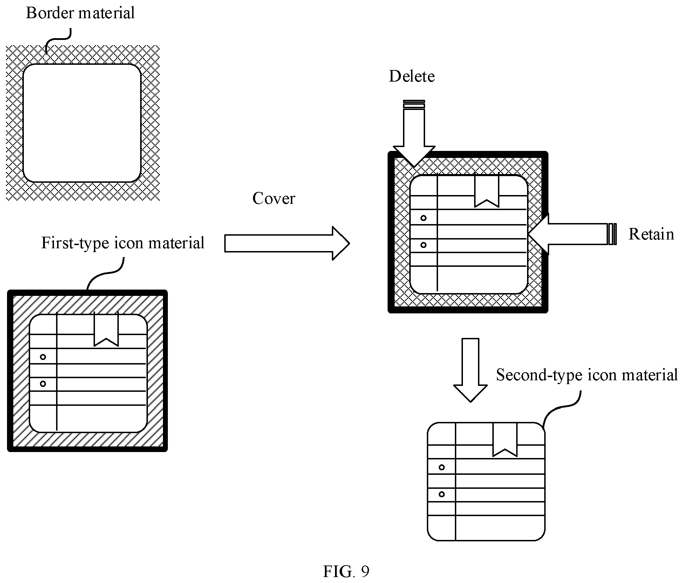

For example, the first-type icon material and the border material that are obtained by the resource management framework are shown in FIG. 9. The resource management framework may cover the first-type icon material with the border material, crop out an area that is in the first-type icon material and that overlaps a main body part of the border material, and retain an area that is in the first-type icon material and that overlaps a blank part of the border material. In this way, the border element in the first-type icon material can be removed to obtain the second-type icon material. It may be understood that a same display effect needs to be presented when the first-type icon material and the second-type icon material are finally displayed on the home screen. That is, when the first-type icon material and the second-type icon material are finally displayed on the home screen, there is a same border element. In addition, because a border in the second-type icon material is from the border material, the border element in the first-type icon material may be removed by using the border material.

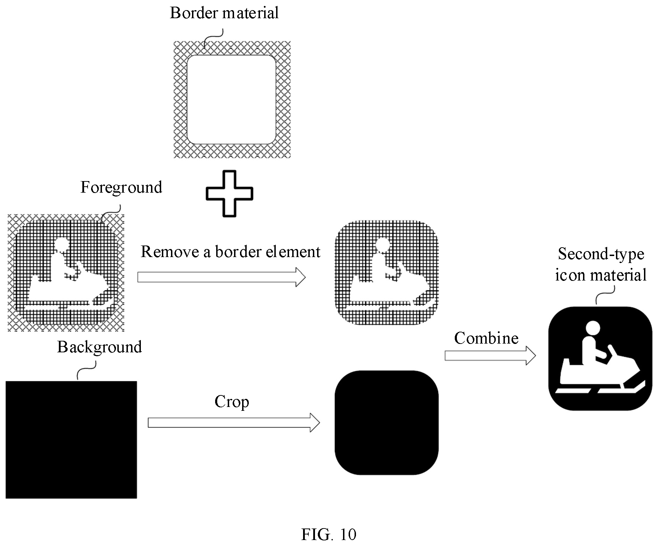

For another example, with reference to FIG. 10, an icon of an application CC is a multi-layer icon, and a foreground of the multi-layer icon and a background of the multi-layer icon are included. The foreground of the multi-layer icon includes a border element. The resource management framework may remove the border element in the foreground by using a border material, and then crop the background by using the border material. Then, a background obtained after cropping and a foreground in which the border element is removed are fused to obtain a second-type icon material. For example, the background is covered with the foreground to obtain a multi-layer icon that is a second-type icon material.

In another possible implementation, the resource management framework may remove the border element by deleting the specified pixel included in the first-type icon material, to obtain the second-type icon material.

In some embodiments, before removing the border element in the first-type icon material, the resource management framework may further adjust the first-type icon material and the border material to a same size. For example, the first-type icon material is adjusted to a size of the border material, the border material is adjusted to a same size as the first-type icon material, or the first-type icon material and the border material are adjusted to any preset size. When the electronic device covers the first-type icon material with the border material, the electronic device may enable centers of the border material and the first-type icon material to overlap each other, so that an effect of deleting the border element can be improved, for example, the border element is deleted more thoroughly.

In some embodiments, the resource management framework may not perform the determining step in step S701, and perform step S702 on each obtained icon material to remove a border element. It may be understood that for the resource management framework, a quantity of computing resources and processing resources consumed to perform step S701 is relatively large and is greater than a quantity of computing resources and processing resources consumed to perform step S702. Therefore, the resource management framework may consider that each icon material obtained by the resource management framework includes a border element, and perform step S702 on each obtained icon material to remove the border element. Based on this, resource consumption (for example, computing resource consumption or processing resource consumption) of the resource management framework may be reduced. It may be understood that for a first-type icon material that does not include a border element, a display effect of the first-type icon material is not affected if step S702 is performed.

S703: The resource management framework sends the second-type icon material and the border material to the home screen APP.

In some embodiments, before the resource management framework sends the second-type icon material and the border material to the home screen APP, the resource management framework may adjust both the second-type icon material and the border material to a specified size. The specified size may be any size.

It may be understood that for the home screen APP, if an icon material and a border material that are received by the home screen APP are of a same size, no processing resources are consumed for the home screen APP to unify sizes of the icon material and the border material. This saves many processing resources and processing procedures, and can improve running efficiency of the home screen APP.

In addition, the home screen APP and the resource management framework are usually developed by different developers. Therefore, if sizes of the second-type icon material and the border material that are sent by the resource management framework to the home screen APP are unified, development costs of the developers can be reduced and efficiency can be improved.

In a possible implementation, the specified size is greater than or equal to a maximum value of icons of all sizes that can be displayed by the home screen APP. For example, the specified size may be the maximum value of the icons of all the sizes that can be displayed by the home screen APP, for example, a maximum value in the foregoing size A, size B, and size C. It may be understood that if the sizes of the border material and the second-type icon material that are received by the home screen APP are greater than or equal to an icon size that can be displayed by the home screen APP, the home screen APP does not perform enlargement processing on the border material and the second-type icon material, and only performs reduction processing on the border material and the second-type icon material. It may be understood that some downsampling operations need to be performed during enlargement processing, while no downsampling needs to be performed during reduction processing, and downsampling affects clarity. Therefore, impact of reduction processing on the clarity is far less than impact of enlargement processing on the clarity.

Based on this, the second-type icon material and the border material are adjusted to the specified size. In this way, clarity of an icon displayed on the mobile phone can be further improved, and user experience can be improved.

In some other embodiments, the resource management framework may further send the second-type icon material and the border material to another application that needs to display an icon, for example, an application manager or a third-party application. For example, if an icon needs to be displayed on an application management page of the application manager, the resource management framework may further send the second-type icon material and the border material to the application manager. In this way, the application manager can display an icon with relatively high clarity. For another example, if an icon needs to be displayed in an application recommendation interface of the third-party application, the resource management framework may further send the second-type icon material and the border material to the another third-party application. In this way, the third-party application can display an icon with relatively high clarity.

In still some other embodiments, after step S700, the resource management framework may directly send the obtained icon material and the obtained border material to another application that needs to display an icon.

After step S703 is performed, steps S704-S706 are performed.

S704: The home screen APP adjusts the sizes of the second-type icon material and the border material.

In some embodiments, the home screen APP may adjust the size of the second-type icon material and the size of the border material to a target size. The target size may be a size of the target icon displayed on the mobile phone. For example, if the target icon is an A-sized icon, the home screen APP adjusts the second-type icon material and the border material to a size corresponding to the A-sized icon, for example, 40PX*40PX. For another example, if the target icon is a B-sized icon, the home screen APP adjusts the second-type icon material and the border material to a size corresponding to the B-sized icon, for example, 20PX*20PX.

In some embodiments, after the home screen APP adjusts the sizes of the second-type icon material and the border material, the home screen APP may further perform a rounding operation on a second-type icon material and a border material obtained after adjustment. For example, most of data on the mobile phone is represented as floating-point/fixed-point numbers. In this data representation manner, some decimals are discarded. For example, 1/3 is represented as 0.3333, and 1/7 is represented as 0.1428. This may cause a non-integer row display phenomenon. For example, if the size of the second-type icon material is 60PX*60PX, the size becomes 19.998PX*19.998PX after being reduced by 1/3. For another example, if the size of the second-type icon material is 63PX*63PX, the size becomes 10.5021PX*10.5021PX after being reduced by 1/6. This also causes non-integer row display phenomenon. Therefore, the home screen APP may further perform a rounding operation on the second-type icon material and the border material obtained after adjustment, to alleviate occurrence of the non-integer row display phenomenon. The rounding operation may be a rounding up operation, an operation of rounding up to an even number, or the like. The rounding up operation may be understood as that a value after rounding is greater than a value before rounding. For example, 19.998PX*19.998PX is rounded up to 20PX*20PX. The operation of rounding up to an even number may be understood as that a value after rounding is greater than a value before rounding, and an even number is obtained after rounding. For example, 10.5021PX*10.5021PX is rounded up to an even number of 12PX*12PX.

It may be learned from the foregoing analysis that through the rounding operation, a pixel displayed in a non-integer row may be changed into a pixel displayed in an integer row. Therefore, occurrence of the non-integer row display phenomenon can be alleviated. In addition, when the operation of rounding up to an even number is used, a size obtained after rounding can be an even number. In this way, icon symmetry can be improved.

S705: The home screen APP obtains an icon display file based on a second-type icon material obtained after size adjustment and a border material obtained after size adjustment.

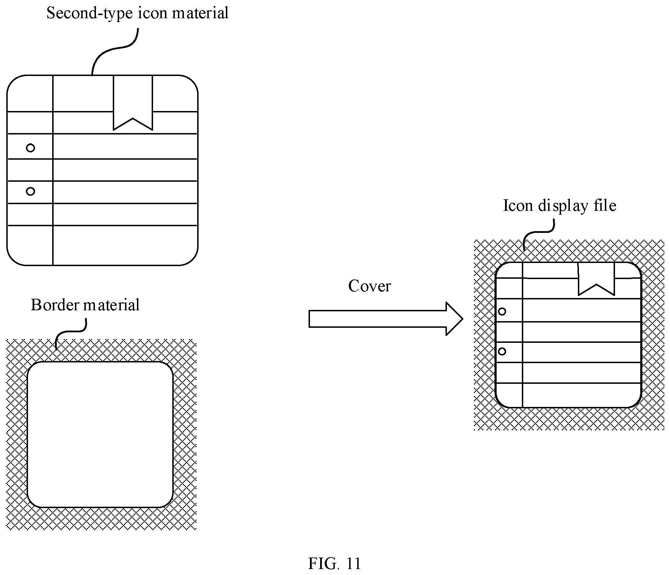

For example, with reference to FIG. 11, the home screen APP may place the border material on the second-type icon material, to obtain the icon display file. The main body part of the border material shields the second-type icon material, and the blank part of the border material does not shield the second-type icon material.

For another example, the home screen APP may reduce the second-type icon material to a same size as the blank part of the border material. Then, the home screen APP combines a second-type icon material obtained after reduction with the border material, to obtain the icon display file.

S706: The home screen APP displays the icon based on the icon display file.

In the solution provided in this embodiment of this application, after the icon display file is obtained, no size adjustment is performed on the icon display file, that is, no size adjustment is performed on the icon display file that includes both icon content and a border element in the solution provided in this embodiment of this application. Instead, before the icon display file is obtained, size adjustment is separately performed on the icon content and the border element. For example, size adjustment is performed on the second-type icon material that includes the icon content, and size adjustment is performed on the border material that includes the border element. Therefore, a non-integer row display phenomenon occurring in the icon display file can be alleviated. Based on this, when the mobile phone displays an icon by using the icon display method, clarity of the icon can be improved, and user experience can be improved.

Then, the icon display method provided in the embodiments of this application is described in detail with reference to a process of using a mobile phone by a user.

When a resource management framework determines, by using a specified pixel, whether an icon material includes a border element, the icon material needs to be analyzed, and some processing time and processing resources are consumed. Based on this, the mobile phone may determine, based on a source of the icon material, whether the icon material includes a border element. In this way, there is no need to analyze the icon material, and it may be determined, based on only a storage path, a name, or the like of the icon material, whether the icon material includes a border element. This can save processing time and processing resources.

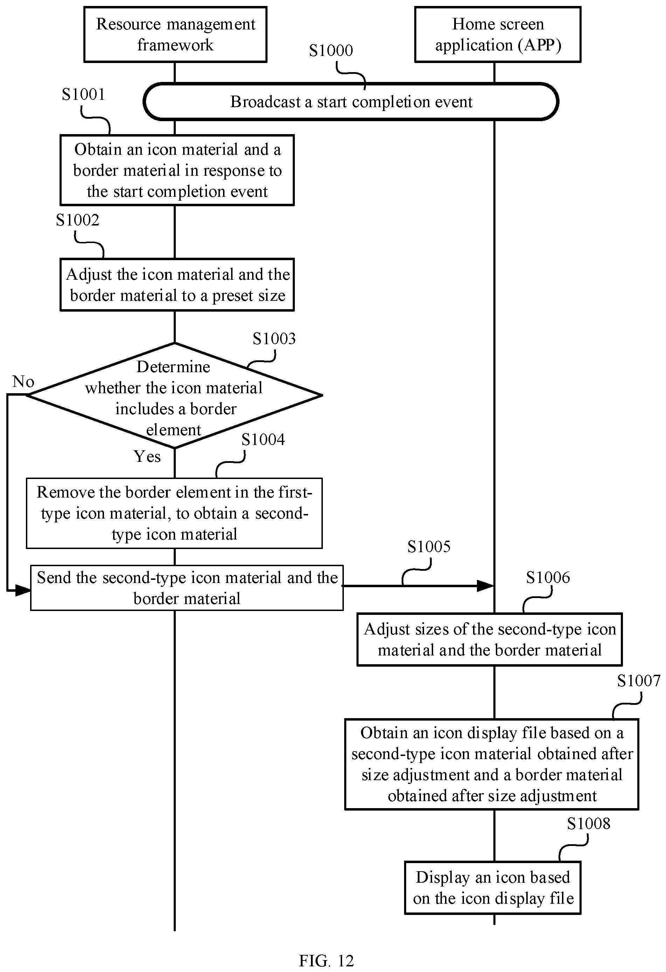

For example, with reference to FIG. 12, the icon display method may include steps S1000-S1008.

S1000: After a home screen APP starts, the home screen APP broadcasts a start completion event.

For example, if a user triggers a power-on operation of the mobile phone or a user triggers a restart operation of the mobile phone, the home screen APP starts, and broadcasts the start completion event after starting.

S1001: A resource management framework obtains an icon material and a border material in response to the start completion event.

In some embodiments, the resource management framework may obtain a preset icon configuration item. The icon configuration item records a name of the icon material that needs to be obtained by the resource management framework, a storage location of the icon material, a name of the border material, a storage location of the border material, sizes of the icon material and the border material that are to be sent by the resource management framework to the home screen APP, and the like. That is, the resource management framework may obtain the icon material and the border material based on the icon configuration item in response to the start completion event.

For example, if no third-party theme but a self-developed theme is applied to the mobile phone, the resource management framework obtains the border material and an icon material of a system application from a self-developed theme package corresponding to the self-developed theme, and the resource management framework obtains an icon material of a third-party APP from a program package of the third-party APP. The self-developed theme may be a theme developed by a manufacturer of the mobile phone.

For another example, if a third-party theme is applied to the mobile phone, the resource management framework obtains the border material and an icon material of a system application from a third-party theme package corresponding to the third-party theme, and the resource management framework obtains an icon material of a third-party APP from a program package of the third-party APP.

S1002: The resource management framework adjusts the icon material and the border material to a preset size.

In some embodiments, the preset size may be obtained by the resource management framework from the icon configuration item, and may be any preset size, for example, 196PX*196PX.

It is assumed that an application AA is a third-party application, a size of an icon material of the application AA is a first resource size, for example, 192PX*192PX, the icon material of the application AA includes a border element, and the border element occupies 10 pixels around the icon material, that is, a size of icon content in the icon material of the application AA is 172PX*172PX. In some embodiments, 192PX*192PX may be referred to as sStandBgSize, and 172PX*172PX may be referred to as IconSize.

An application BB is a system preset application, a size of an icon of the application BB is a second resource size, for example, 196PX*196PX, and the icon of the application BB does not include a border element. An application CC is a third-party application, and an icon of the application CC is a multi-layer icon, and includes a foreground, a background, and an icon boundary. The foreground of the application CC includes a border element, and a size of the foreground is the second resource size. For a multi-layer icon, a size of a foreground of the icon is a size of an icon material. The resource management framework may adjust the size of the icon material of the application AA to the second resource size. In this way, sizes of different icon materials can be unified, so that the icon display method provided in this embodiment of this application can be compatible with icon materials of different resource sizes, to improve universality of the icon display method. In addition, all icon materials received by the home screen APP are of a same size, thereby improving processing efficiency of the home screen APP. In addition, for a developer (development team) of the home screen APP, if all the icon materials received by the home screen APP are of the same size, development costs of the developer can be reduced.

S1003: The resource management framework determines whether the icon material includes a border element. If there is a border element, steps S1004-S1005 are performed. If there is no border element, step S1005 is performed.

In some embodiments, in step S1003, the resource management framework may further perform steps S1004-S1005 or step S1005 based on a source of the icon material. It may be understood that for some mobile phones, performance of a processor of the mobile phone is low, and it takes a relatively large amount of processing time for a resource management framework to determine whether an icon material includes a border element. When the icon material is a multi-layer icon, it further takes processing time to determine whether the icon material includes a border element. Therefore, the resource management framework may determine, based on the source of the icon material, whether the icon material includes a border element, and choose to perform steps S1004-S1005 or step S1005. For example, if the icon material is from a third-party theme package and a third-party program package, it is determined that the icon material is a first-type icon material, and steps S1004-S1005 are performed; or if the icon material is from a self-developed theme package, it is determined that the icon material is a second-type icon material, and step S1005 is performed.

For example, in step S1003, the resource management framework may perform steps S1004-S1005 or step S1005 based on the following Table 1, the source of the icon material, and/or a quantity of layers forming the icon (for example, a multi-layer icon or a single-layer icon).

**Table 1**

| Source of the icon material | Single-layer icon/Multi-layer icon | Application corresponding to the icon | Steps performed |
|---|---|---|---|
| Self-developed theme package | Single-layer icon | System application | Step S1005 or steps S1004-S1005 |
| Self-developed theme package | Multi-layer icon | System application | Step S1005 or steps S1004-S1005 |
| Third-party theme package | Single-layer icon | System application | Steps S1004-S1005 |
| Third-party theme package | Multi-layer icon | System application | Steps S1004-S1005 |
| Program package of a third-party APP | Single-layer icon | Third-party application | Steps S1004-S1005 |
| Program package of a third-party APP | Multi-layer icon | Third-party application | Steps S1004-S1005 |

It may be understood that usually, whether an icon material from a self-developed theme package includes a border element may be modified by the manufacturer of the mobile phone. However, whether an icon material from a program package of a third-party APP and an icon material from a third-party theme package include a border element cannot be modified by the manufacturer of the mobile phone. Therefore, it may be considered, by default, that the icon material from the program package of the third-party APP and the icon material from the third-party theme package include a border element, and step S1004 is performed to remove the border element. In this way, processing resources of the mobile phone can be saved, and clarity of the icon can be improved. In addition, for icon materials from some third-party theme packages, even if the icon material does not include a border element, execution of step S1004 causes no impact on the icon material, and subsequently the icon may be displayed on the mobile phone.

For the self-developed theme package, step S1005 may be directly performed, or steps S1004-S1005 may be performed.

Specifically, for another implementation of step S1003, refer to the related descriptions of step S701. Details are not described herein again.

S1004: The resource management framework removes the border element in the first-type icon material, to obtain a second-type icon material.

Specifically, for an implementation of step S1004, refer to the related descriptions of step S702. Details are not described herein again.

S1005: The resource management framework sends the second-type icon material and the border material to the home screen APP.

After step S1005 is performed, steps S1006-S1008 are performed.

S1006: The home screen APP adjusts sizes of the second-type icon material and the border material.

S1007: The home screen APP obtains an icon display file based on a second-type icon material obtained after size adjustment and a border material obtained after size adjustment.

S1008: The home screen APP displays the icon based on the icon display file.

Specifically, for implementations of step S1005-step S1008, refer to the related descriptions of steps S703-S706. Details are not described herein again.

In some embodiments, after step S1008 is performed, if the user changes a theme applied to the mobile phone, the home screen APP may modify the name of the border material and the storage location of the border material in the icon configuration item. After modifying the icon configuration item, the home screen APP may generate a theme change event. In this way, the resource management framework may obtain the icon material and the border material in response to the theme change event, to update the theme displayed on the mobile phone.

In some other embodiments, after step S1008 is performed, if the user downloads a new APP, the home screen APP may add a storage location and a name of an icon material of the new APP to the icon configuration item. After modifying the icon configuration item, the home screen APP may generate a home screen icon update event. In this way, the resource management framework may obtain the icon material and the border material in response to the home screen icon update event, to add an icon of the new APP for display on the mobile phone.

Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In the embodiments, the electronic device may be divided into functional modules based on the foregoing method examples. For example, each functional module may be obtained through division for each corresponding function, or two or more functions may be integrated into one processing module. The integrated module may be implemented in a form of hardware. It should be noted that division into the modules in the embodiments is an example, and is merely logical function division. In actual implementation, there may be another division manner.

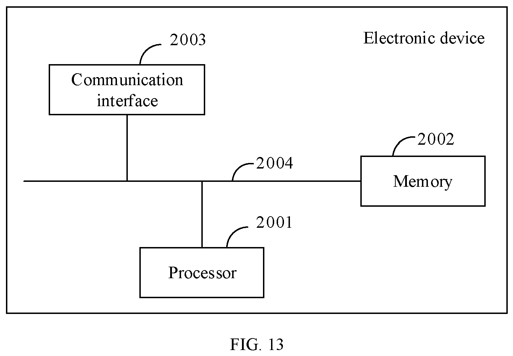

An embodiment of this application further provides an electronic device. As shown in FIG. 13, the electronic device may include one or more processors 2001, a memory 2002, and a communication interface 2003.

The memory 2002, the communication interface 2003, and the processor 2001 are coupled. For example, the memory 2002, the communication interface 2003, and the processor 2001 may be coupled together through a bus 2004.

The communication interface 2003 is configured to perform data transmission with another device. The memory 2002 stores computer program code. The computer program code includes computer instructions. When the computer instructions are executed by the processor 2001, the electronic device is enabled to perform the related method steps in the foregoing method embodiments of this application.

The processor 2001 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content of this disclosure. The processor may alternatively be a combination that implements a computing function, for example, a combination of one or more microprocessors or a combination of a DSP and a microprocessor.

The bus 2004 may be a peripheral component interconnect (peripheral component interconnect, PCI) bus, an extended industry standard architecture (extended industry standard architecture, EISA) bus, or the like. The bus 2004 may be classified into an address bus, a data bus, a control bus, and the like. For ease of representation, only one thick line is used for representation in FIG. 13, but this does not indicate that there is only one bus or one type of bus.

An embodiment of this application further provides a computer-readable storage medium. The computer storage medium stores computer program code. When the foregoing processor executes the computer program code, the electronic device performs the related method steps in the foregoing method embodiments.

An embodiment of this application further provides a computer program product. When the computer program product runs on a computer, the computer is enabled to perform the related method steps in the foregoing method embodiments.

The electronic device, the computer-readable storage medium, or the computer program product provided in this application is configured to perform the corresponding method provided above. Therefore, for beneficial effects that can be achieved by the electronic device, the computer-readable storage medium, or the computer program product, refer to the beneficial effects of the corresponding method provided above. Details are not described herein again.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps in the method in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. An icon display method, applied to an electronic device, wherein a target application is installed on the electronic device, and the method comprises:
obtaining a first image and a second image that correspond to a target icon, wherein the target icon is an icon of the target application, the first image comprises a content element of the target icon, and the second image comprises a border element of the target icon;
adjusting a size of the first image to obtain a first image of a first size, wherein the first size is a size when the first image is displayed;
adjusting a size of the second image to obtain a second image of a second size, wherein the second size is a size when the second image is displayed;
combining the first image of the first size and the second image of the second size to obtain an icon display file; and
displaying the target icon based on the icon display file.

2. The method according to claim 1, wherein the first image further comprises the border element;
before adjusting the size of the first image, the method further comprises:
deleting the border element comprised in the first image; and
adjusting the size of the first image to obtain the first image of the first size comprises:
adjusting the size of the first image in which the border element is deleted, to obtain the first image of the first size.

3. The method according to claim 2, wherein deleting the border element comprised in the first image comprises:
deleting the border element comprised in the first image based on the second image.

4. The method according to claim 3, wherein the second image comprises a main body part and a blank part, and the main body part comprises the border element; and
deleting the border element comprised in the first image based on the second image comprises:
covering the first image with the second image; and
retaining an area that overlaps the blank part in the first image, and deleting an area that overlaps the main body part in the first image.

5. The method according to any one of claims 2-4, wherein deleting the border element comprised in the first image comprises:
if a quantity of specified pixels comprised in the first image is greater than a preset quantity threshold, the border element comprised in the first image, wherein
the specified pixels comprise identical pixels having a maximum quantity among pixels comprised in the second image.

6. The method according to any one of claims 2-4, wherein deleting the border element comprised in the first image comprises:
if the target application comprises a third-party application, deleting the border element comprised in the first image.

7. The method according to any one of claims 2-4, wherein deleting the border element comprised in the first image comprises:
if the target application comprises a system application and a third-party theme is applied to the electronic device, deleting the border element comprised in the first image.

8. The method according to any one of claims 1-7, wherein before combining the first image of the first size and the second image of the second size, the method further comprises:
performing a rounding operation on the first image of the first size and the second image of the second size; and
combining the first image of the first size and the second image of the second size comprises:
combining a first image of the first size obtained after the rounding operation and a second image of the second size obtained after the rounding operation.

9. The method according to any one of claims 1-8, wherein obtaining the first image and the second image that correspond to the target icon comprises:
obtaining an icon image and the second image that correspond to the target icon in response to a specified event, wherein
the specified event comprises any one of a home screen application start completion event, an icon update event, and a theme change event.

10. The method according to any one of claims 1-9, wherein the electronic device comprises a home screen application and a resource management framework, and obtaining the first image and the second image that correspond to the target icon comprises:
obtaining, by the resource management framework, the first image and the second image that correspond to the target icon; and
adjusting, by the resource management framework, the sizes of the first image and the second image to a specified size, wherein the specified size is greater than or equal to a maximum size of each icon displayed on the electronic device; and
the method further comprises:
sending, by the resource management framework, a first image of the specified size and a second image of the specified size to the home screen application; and
receiving, by the home screen application, the first image of the specified size and the second image of the specified size.

11. An electronic device, wherein the electronic device comprises a memory, one or more processors and a camera, the memory is coupled to the processor, the processor is coupled to the camera, the memory stores computer program code, the computer program code comprises computer instructions, and when the computer instructions are executed by the processor, the electronic device is enabled to perform the method according to any one of claims 1-10.

12. A computer-readable storage medium, comprising computer instructions, wherein when the computer instructions are run on an electronic device, the electronic device is enabled to perform the method according to any one of claims 1-10.
